# NEW EUROPEAN PATENT SPECIFICATION

(11) **EP 0 693 871 B2**
(45) Date of publication and mention of the opposition decision: **08.09.2004**
(45) Mention of the grant of the patent: 28.01.1998
(21) Application number: 94913203.9
(22) Date of filing: 29.03.1994
(51) Int. Cl.: A01J 7/00

(54) **A CONSTRUCTION FOR AUTOMATICALLY MILKING ANIMALS**
GERÄT ZUM AUTOMATISCHEN MELKEN VON TIEREN
INSTALLATION DE TRAITE AUTOMATIQUE D'ANIMAUX

(30) Priority: 01.04.1993 NL 9300578
(43) Date of publication of application: 31.01.1996
(60) Divisional application: 97202059.8
(73) Proprietor: MAASLAND N.V., 3155 PD Maasland (NL)
(72) Inventor: VAN DER LELY, Cornelis, CH-6300 Zug (CH)
(74) Representative: Corten, Maurice Jean F.M.
(86) International application number: PCT/NL1994/000066
(87) International publication number: WO 1994/022292

(56) References cited:
- EP-A- 0 302 559
- EP-A- 0 306 579
- EP-A- 0 360 354
- EP-A- 0 448 132
- EP-A- 0 532 066
- EP-A- 1 189 954
- DE-A- 4 113 700
- NL-A- 9 101 064
- SU-A- 1 311 642

## Description

The present invention relates to a construction for automatically milking animals, such as cows, comprising a milking box with a milking robot having two or four robot arm constructions with carriers for teat cups, which carriers are movable in a horizontal plane and in an up- and downward direction.

Such a construction is known from EP-A1-0 532 066. In said document there are four robot arm constructions which are connected to a common frame wherein they are individually movable in an up- and downward direction. Further these robot arm constructions are movable in a horizontal plane. The frame as a whole is movable in such a way that the robot arm constructions are movable from the rear side of an animal between its hind legs; particularly by means of a telescopic supporting structure the carriers of the robot arm constructions with the teat cups are movable between the hind legs of the animal under the animal's udder. For the animal, this is a rather unnatural situation, whereby the animal's hind legs are forced in a spread position.

The construction, according to the invention, is characterized by the features of claim 1.

From EP-A1-0 306 579 a construction is known wherein two robot arm constructions are arranged on either side of the milking box, the carriers being individually movable from a non-working position sidewards the milking box to a working position under the animal's udder and extending in at least two different directions. However, each of this robot arm constructions carries only one teat cup, with the consequence that two further robot arm constructions are added, which robot arm constructions are mounted under the floor of the milking parlour. Further the robot arm constructions on either side of the milking parlour are not movable in a horizontal plane.

In the latter embodiment it is favourable that, during milking, at least one carrier is in a position behind a hind leg of an animal and at least one other carrier in a position in front of a hind leg of this animal. Particularly in this case the construction may be characterized in that, during milking, the carriers of the teat cups are arranged in an approximately horizontal plane in the shape of a star around the udder of an animal. In all the embodiments the carriers are preferably of a curved shape.

According to the invention, the construction is furthermore characterized in that during milking, using a flexible connecting element such as a cable or a cord, a teat cup is connected in a freely movable manner to a relevant carrier and, after milking, can be pulled against the end of this carrier. If the teat cups are connected capably of free motion to the carriers, no lateral or other forces are exerted on the teats and the animal is in a comfortable position for being milked by the milking robot. In accordance with a further feature of the invention, the construction, as described in the preamble, is characterized in that, at its side, a teat cup is provided with a bulge which can be pulled with the aid of a flexible connecting element into a correspondingly shaped recess in the end of a carrier. This measure renders it possible to pull the teat pup, which during milking can move freely with respect to a carrier, in a defined position against the carrier after milking.

For a better understanding of the invention and to show how the same may be carried into effect, reference will now be made, by way of example, to the accompanying drawings, in which:
Figure 1 is a plan view of a milking box, the milking robot comprising two carriers for two teat cups each;
Figure 2 is a side view of the milking box shown in Figure 1;
Figures 3 - 7 show the consecutive positions occupied by the carriers for coupling of the teat cups;
Figure 8 is a plan view of the end section of a carrier for two teat cups;
Figure 9 is a side view of the carrier end section shown in Figure 8;
Figure 10 is a plan view of a second embodiment of a milking box, in which use is made of four carriers for carrying one teat cup each, whilst from both sides one teat cup can be moved to under the animal passing between a front leg and a hind leg and two teat cups can be brought in position by passing them between the two hind legs;
Figure 11 is a plan view of an embodiment not related to the invention of a milking box, in which use is made of four carriers for carrying one teat cup each, whilst from both sides two teat cups can be moved to under the animal between a front leg and a hind leg;
Figure 12 is a rear view of the milking box shown in Figure 11;
Figure 13 is a plan view of the end section of a carrier for one teat cup, and
Figure 14 is a side view of the carrier end section as shown in Figure 13.

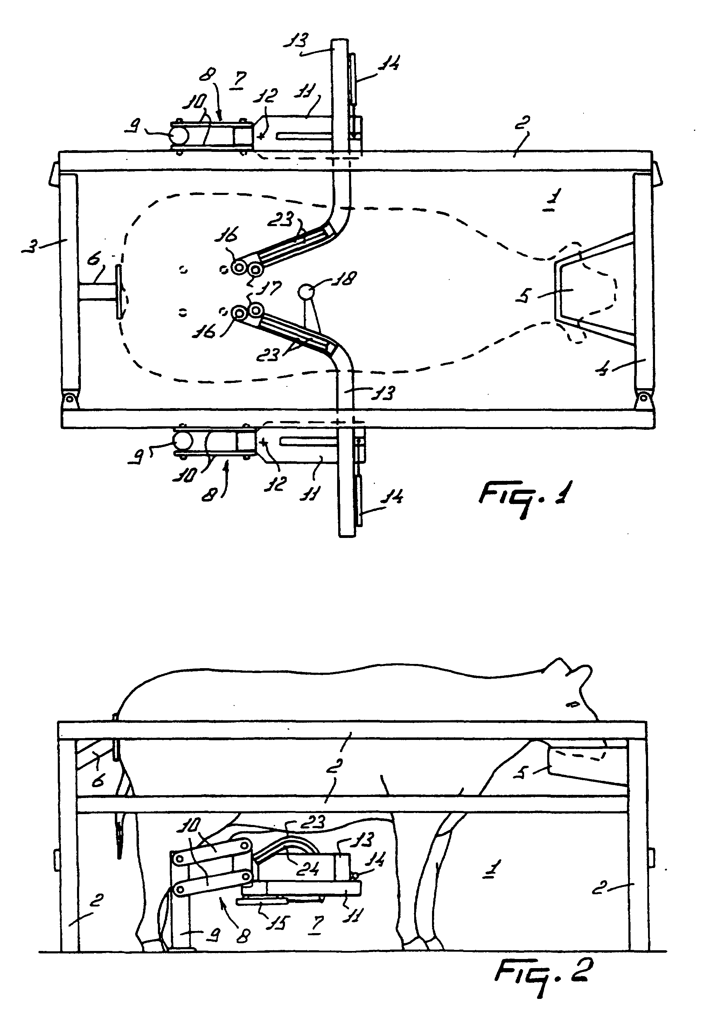

Figures 1 and 2 show a plan view and a side view, respectively, of a milking box 1 which is formed by a frame 2, which constitutes the two sides of the milking box 1, a door 3, via which an animal to be milked can enter the milking box, and a door 4, through which a milked animal can again leave the milking box. Attached to the door 4 there is a feed trough 5 which forms part of an automatic feeding system - not shown - for supplying concentrate. The door 3 is equipped with positioning means 6 for retaining an animal present in the milking box in a more or less defined position in the milking box 1. The milking box 1 is provided with a milking robot 7 which, in this embodiment, comprises two robot arm constructions 8, which are arranged on either side of the milking box 1. These robot arm constructions 8 are shown only schematically and include a vertically arranged pillar 9, to the upper end of which a parallelogram construction 10 is attached, a supporting element 11 being movable in height with the aid of this parallelogram construction 10. In addition, this supporting element 11 is pivotal about a vertical shaft 12. By means of the supporting element 11, a carrier 13 is arranged in such a manner extending in two directions, which are perpendicular to each other, that it is movable in a horizontal plane. Although the motional means for moving the supporting element 11 in the vertical direction with the aid of the parallelogram construction 10 and the motional means for pivoting same about the vertical shaft 12 are not shown in the drawings, the means with the aid of which the carrier 13 is movable with respect to the supporting element 11 in two directions which extend perpendicularly to each other are however indeed shown. Both these latter motional means and the non-shown motional means are preferably constituted by pneumatic cylinders 14 and 15. These cylinders 14 and 15 act as a kind of spring to allow a limited freedom of motion of the carrier 13, more specifically when it comes in some way or another in contact with the animal in a rough manner. The carrier 13 extends in two directions. Figure 1 shows that that portion of the carrier 13 that is connected to the supporting element 11 extends in a horizontal plane transversely to the longitudinal direction of the milking box 1, whereas the other end of the carrier 13 extends in a horizontal plane obliquely rearwardly and inwardly. Such a construction of the carriers 13 allows an easy access to the teats of the animal without being obstructed by the legs and without the carriers 13 of the teat cups interfering with each other. In this embodiment, each of the carriers 13 is suitable for carrying two teat cups 16 and 17. Because of the use of two carriers 13 of a very specifically chosen design and by arranging these carriers on both sides of the milking box 1, simultaneous coupling of two teat cups 16 or 17 to two teats is possible, as a result of which the period of time for coupling the teat cups to the teats can be significantly reduced. One of the carriers 13 is equipped with a detection device 18, such as a laser. This detection device 18 is disposed in such a manner that, when the carrier 13 to which this detection device is attached has been moved to under the animal in the position shown in Figure 1, the detection device 18 is located approximately in the midway point under the animal at the leading side of the udder. With the aid of this detection device 18, which is disposed in such a manner that it reciprocates or rotates about a vertical shaft, it is possible to determine the position of the four teats with respect to the carrier 13 to which the detection device 18 is connected. With the aid of the cylinders 14 and 15 the carrier 13, to which the detection device 18 is connected, can be moved, until the position of a teat, determined by the detection device 18, with respect to the detection device 18 corresponds to the position of a relevant teat cup on the last-mentioned carrier with respect to the detection device 18. For the displacement of the other carrier, the position of the carrier to which the detection device 18 is connected and the position, measured with the aid of the detection device 18, of the relevant teats with respect to the carrier to which the detection device 18 is connected must be taken into account.

The carriers 13 are at least partly of a tubular design and comprise a non-shown cylinder, whose end is connected to a teat cup 16, 17 via a flexible connecting element 19. This flexible connecting element 19, which may be constituted by a cord or a cable, renders it possible for the teat cup connected thereto to remain, during milking, in connection in a freely movable manner with the relevant carrier 13, more specifically by refraining from energizing, during milking, the cylinder to which the flexible connecting element 19 is connected and which is disposed in the tubular carrier 13, whilst, after milking, by energizing the last-mentioned cylinder, the teat cup can be pulled up against the end of the carrier 13. When a carrier 13 has been moved such with the aid of the cylinders 14 and 15 that one of the teat cups has been moved to under a relevant teat and is connected thereto, then, after releasing the cylinder in the tubular carrier, this carrier can be moved more in particular in such a mannner that the other teat cup connected to this carrier is moved to under another teat for connection to said teat.

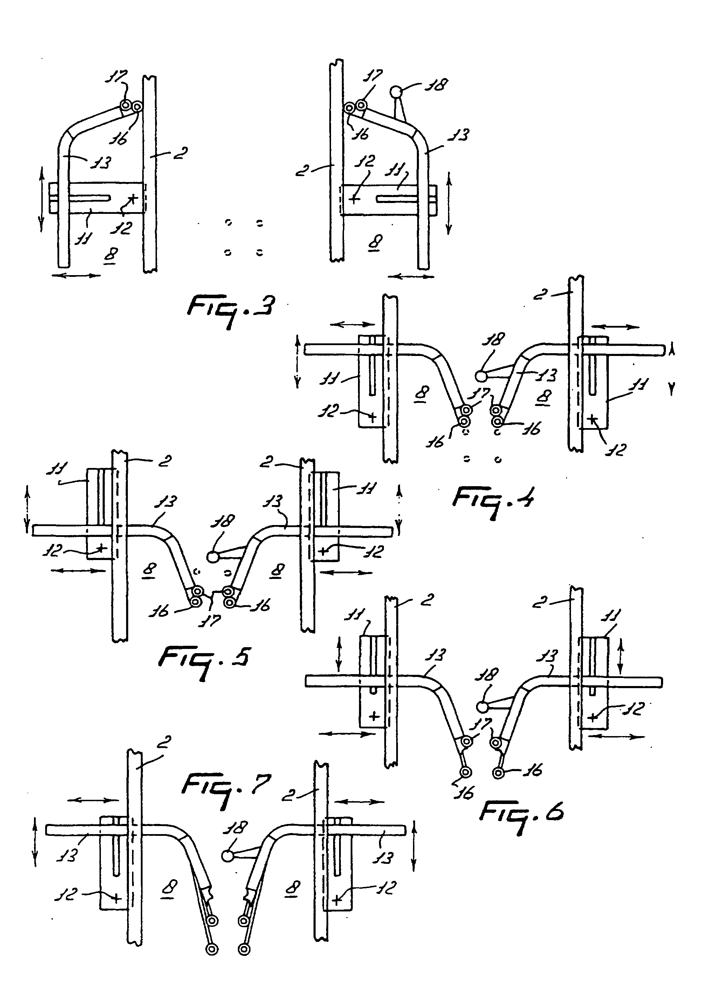

With reference to Figures 3 - 7, it will be described how the teat cups 16, 17, two of which are connected to each carrier 13, can be connected to the teats of an animal in the milking box 1.

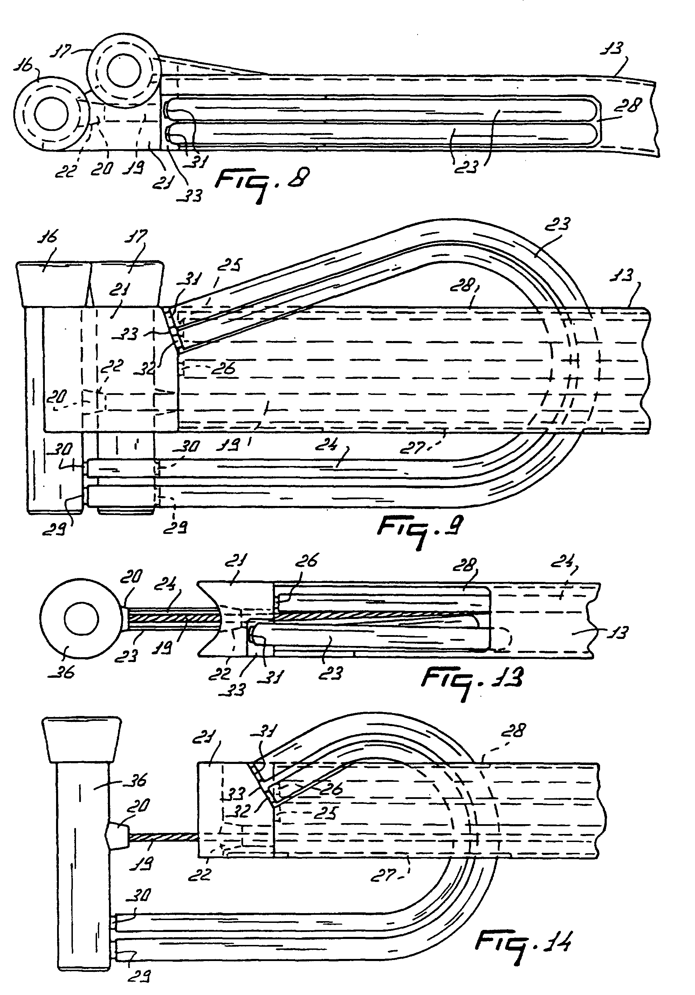

In Figure 3, the two robot arm constructions 8 are disposed on both sides of the milking box 1 in the rest condition. In this condition, an animal to be milked can enter the milking box 1; the supporting element 11 has then been pivoted in such a manner about the vertical shaft 12 that this supporting element extends outwardly transversely to the longitudinal direction of the milking box 1. The carriers 13 with the teat cups 16 and 17 are then completely outside the milking box 1. By pivoting the supporting element 11 through 90° about the shaft 12, the carriers 13 with the teat cups 16 and 17 are moved to under the animal standing in the milking box 1. In this situation, which is shown in Figure 4, the detection device 18 is in a position approximately in the midway point under the animal, more specifically at the leading side of the udder of this animal. The carriers 13 can now be moved individually or simultaneously in such a manner in two directions which are perpendicular to each other, that the teat cups 16 arrive under the rear teats of the animal, so that only an upward motion of the teat cups 16 is sufficient to connect them to these teats. This situation is shown in Figure 5. Thereafter the relevant cylinders contained in the tubular carriers, of which each cylinder is connected to a teat cup 16 via a flexible connecting element 19, are released, so that the carriers 13 can be advanced without pulling the teat cups 16 from the teats. The carriers 13 are now moved such that the teat cups 17 arrive under the leading teats of the animal, whereafter the teat cups 17 can be connected individually or simultaneously by an upward motion to the leading teats of the animal. This situation is shown in Figure 6. Thereafter the cylinders contained in the tubular carriers, each cylinder of which is connected via a flexible connecting element 19 to a teat cup 17, are de-energized, so that tee carriers 13 can be advanced, resulting in that all four teat cups 16, 17 continue to be in a flexible connection with the two carriers 13, so that during milking the animal has some motional freedom without the risk that the teat cups could be pulled from the teats, which might be the case when a rigid connection of the teat cups to the carriers were used. The latter situation is shown in Figure 7.

Figures 8 and 9 show in a plan view and a side view, respectively, how the two teat cups 16 and 17 are connected to the end of a carrier 13. At its side, each teat cup is provided with a bulging portion, preferably a conical bulge 20, to which the flexible connecting element 19 is connected. That end of a carrier 13 that is located near the teat cups is provided with a through-connection element 21. This through-connection element 21 has at its exterior side two recesses 22, the shape of which corresponds to the conical bulge 20 at the side of the teat cups 16, 17. Such a conical recess 22 has a through-bore through the through-connection element 21, through which the relevant flexible connecting element 19 is passed, so that when this flexible connecting element 19 is tightened, the conical bulge 20 at the side of the relevant teat cup is pulled into the relevant conical recess 22 in the through-connection element 21. The through-connection element 21 also serves for the through-connection of the milk and/or pulsation tube leading to a teat cup. The milk tube 23 and/or the pulsation tube 24 are passed through the tubular carrier 13 to the respective points of connection 25 and 26 provided for that purpose in the through-connection element 21. In addition, the milk tube 23 and the pulsation tube 24, if present, must be of a flexible construction between the through-connection element 21 and the teat cups 16 and 17. For that purpose, the end of the tubular carrier 13 is provided at both the bottom side and the upper side with a slotted aperture 27 and 28, respectively. From the connecting points 29 and 30 of the teat cups, the milk and pulsation tubes extend one above the other, passing underneath the end of the carrier 13 and thereafter are passed upwardly through the carrier 13 through the slotted aperture 27 at the bottom side of the carrier 13 and via the slotted aperture 28 and the upper side of the carrier 13 in a loop shape over and along the carrier 13 forwardly and downwardly to the connecting points 31 and 32 at the rear side of the through-connection element 21; to that end, this rear side is provided with a bevelled plane 33. The size and the flexibility of the loop-shaped section of the milk and/or pulsation tube 23 and 24, respectively, between the teat cups 16, 17 and the through-connection element 21 in the tubular carrier 13, together with the length of the flexible connecting element 19 and the stroke of the cylinder connected to this flexible connecting element 19 determine, once the teat cups have been connected to the teats, the extent to which the carrier 13 can be withdrawn.

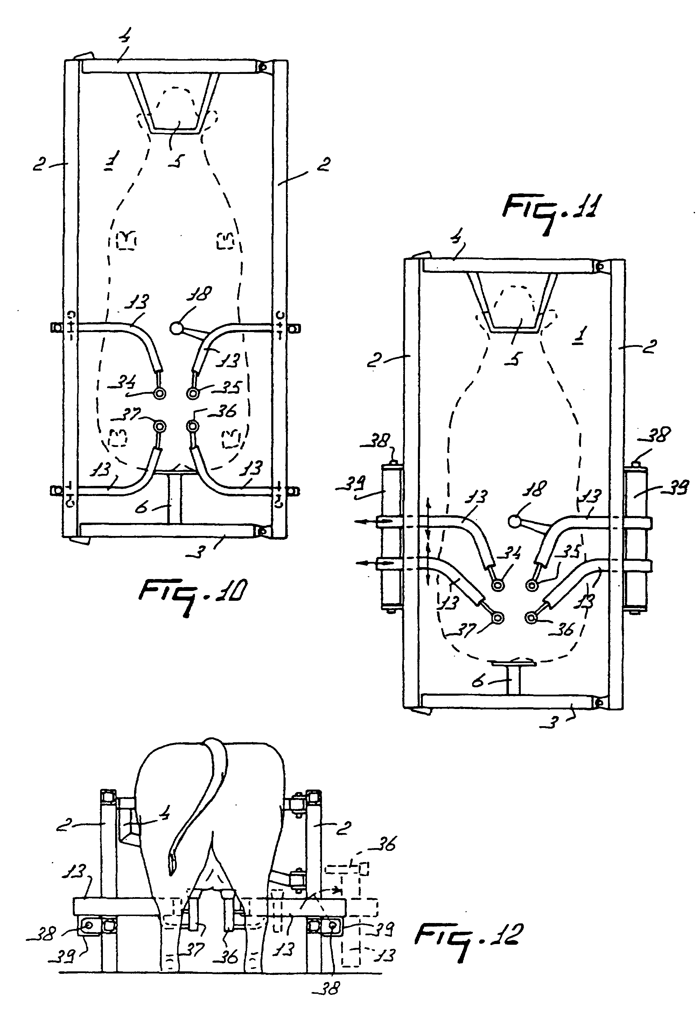

In the embodiments as illustrated in Figures 10 and 11, four carriers 13, each for a teat cup 34, and 35, 36 and 37, respectively, are shown. In both cases, the carriers are arranged in the shape of a star and also here extend each in two directions. In a similar manner as shown in Figure 1, one of the carriers 13 is equipped with a detection device 18. In the embodiment shown in Figure 10, the carriers 13 are arranged such that the carriers with the teat cups 34, 35 which are to be connected to the leading teats of the animal must approach the udder from the side of the milking box 1 passing between the front and hind legs, whereas the carriers with the teat cups 36, 37 which are intended for connection to the rear teats must be moved to under the animal passing between the two hind legs. In this embodiment, the carriers 13 are still further remote from each other and can easily be moved to under the animal independently of each other, both individually and simultaneously, without interfering with each other. As is also the case in Figure 1, the carriers may again have been disposed such that they are movable in two directions and moreover are arranged pivotally near the exterior wall of the milking box 1. A similar construction as shown in Figure 1 is then possible. In Figure 11 two carriers 13, each carrying one teat cup for a leading and one for a trailing teat, are each time moved to under the udder of the animal from one side of the milking box 1 passing between a front and a hind leg. This construction is shown in a rear view in Figure 12. In this situation, the carriers 13 are pivotal about a horizontal pivot shaft 38 which extends in the lengthwise direction of the milking box 1 and, in the embodiment shown, is disposed just next to the longitudinal side wall of the milking box 1. Also in this case, the carriers 13 are movable in both the lengthwise direction of the milking box 1 and in the direction transversely thereto. A supporting element 39, onto which the carriers 13 have been disposed, is pivotal about the shaft 38. In the rest position, the carriers 13 are in a vertical position outside the milking box 1, whilst the carriers 13 are moved in a horizontal plane by having them perform a pivotal motion about the horizontal shaft 38, in which plane the teat cups can be displaced in both the transverse direction and in the lengthwise direction of the milking box 1 for being moved to under the teats of the animal. The connection of each of the teat cups 34 - 37 to a carrier 13 is here similar to the manner in which in Figures 8 and 9 two teat cups are coupled to a carrier 13. The connection of one teat cup and one carrier is shown in Figures 13 and 14. Also in this case, the teat cup is provided at its side with a conical bulging portion 20, to which a flexible connecting element 19 is secured, whilst with the aid of this flexible connecting element the conical bulging portion can be pulled into a recess 22 of a through-connection element 21. To that end, also the recess 22 has a through-bore for the flexible connecting element. Also in this case, the carrier 13 is provided at both the bottom side and the upper side with respective slotted apertures 27 and 28, so that a milk and/or pulsation tube 23 and 24, respectively, can be passed at the bottom side of the carrier 13 through the carrier 13 in the upper direction and through the slotted aperture 28 in the upper side of the carrier 13 and be connected in the shape of a loop to the through-connection element 21 in a similar manner as shown in Figure 9. Obviously, it also holds here that, when a teat cup has been connected and the carrier 13 is withdrawn, the extent to which the carrier can be withdrawn is determined by the nature of the loop in the milk and/or pulsation tube, more in particular by the flexibility of the material of both tubes, and of course the length of the flexible connecting element and the stroke of the cylinder connected thereto in the carrier. The manner of coupling a cup to a teat and the withdrawing mechanism of a cup on a carrier arm 13 are similar to those in the embodiment illustrated in Figures 8 and 9.

The invention is not limited to the embodiments described and shown here, but also relates to all kinds of modifications, of course in sofar they are within the scope of the accompanying claims.

## Claims

1. A construction for automatically milking animals, such as cows, comprising a milking box (1) with a milking robot (7) having either two robot arm constructions (8) each being provided with a supporting element (11) and a carrier (13) for two teat cups (16, 17), or four robot arm constructions (8) each being provided with a supporting element and a carrier for only one teat cup (34; 35; 36; 37), these four teat cups (34; 35; 36; 37) being disposed in a two-by-two relationship on both lateral sides of the milking box (1), which carriers (13) are movable in a horizontal plane and in an up- and downward direction, **characterized in that** the robot arm constructions (8), carrying together all the teat cups, are arranged on both lateral sides of the milking box, so that two teat cups for the left teats of the animal are arranged on the corresponding lateral side and two teat cups for the right teats of the animal are arranged on the other lateral side, the carriers (13) being individually movable from a non-working position sidewards the milking box (1) to a working position under an animal's udder and extending in at least two different directions, in which each carrier (13) is disposed in such a manner near a side wall of the milking box (1) that it is movable in at least two directions which, preferably, are perpendicular to each other, each carrier (13) is pivotal from the non-working position to the working position and, in this working position, is movable in said horizontal plane in two directions which are approximately perpendicular to each other on the supporting element (11) which is pivotal about a predominantly vertical shaft (12), whilst by pivoting it about this shaft (12) the carrier (13) can be moved from the non-working position to the working position, and the supporting element (11) is disposed capably of being moved in height in said up- and downward direction for example by means of a parallelogram construction (10), at the exterior side of and near a side wall of the milking box (1).

2. A construction as claimed in claim 1, **characterized in that**, during milking, at least one carrier (13) is in a position behind a hind leg of an animal and at least one other carrier (13) in a position in front of a hind leg of this animal.

3. A construction as claimed in claim 1 or 2, **characterized in that**, during milking, the carriers (13) of the teat cups (34 - 37) are arranged in an approximately horizontal, plane in the shape of a star around the udder of an animal.

4. A construction as claimed in any one of the preceding claims, **characterized in that** the carriers (13) are of a curved shape.

5. A construction as claimed in claim 1, **characterized in that** a carrier (13) can be moved under the udder of an animal in both the lengthwise direction and the transverse direction of the milking box (1).

6. A construction as claimed in any one of the preceding claims, **characterized in that** a detection device (18), such as a laser, is present, which is connected to one of the carriers (13), with the aid of which detection device (18) the position of the teats of an animal can be determined.

7. A construction as claimed in claim 6, **characterized in that**, when the carrier to which the detection device (18) is connected has been adjusted to the working position and has been moved in such a manner that the teat cup or teat cups carried thereby are under the udder of the animal, the detection device (18) is in a position approximately in the midway point under the animal at the leadng ' side of the udder.

8. A construction as claimed in any one of the preceding claims, **characterized in that** at least the end of a carrier (13) where it carries one or more teat cups (16, 17, 34 - 37) is of a tubular structure.

9. A construction as claimed in claim 8, **characterized in that** a teat cup (16, 17, 34 - 37) is connected with the aid of a flexible connecting element (19). such as a cord or cable, in such a manner that, during milking, it can move freely and, after milking, is pulled up against the end of this carrier (13).

10. A construction as claimed in claim 9, **characterized in that** the flexible connecting element (19) is disposed in the tubular portion of the carrier (13).

11. A construction as claimed in any one of claims 8 - 10, **characterized in that** a teat cup (16,17,34-37) is provided, at its side, with a bulging portion (20) which can be pulled into a correspondingly shaped recess (22) in the end of a carrier (13) with the aid of a flexible connecting element (19).

12. A construction as claimed in any one of claims 8 - 11, **characterized in that**, at or near the end of a tubular carrier (13), a through-connection element (21) is incorporated therein for one or more milk (23) and/or pulsation (24) tubes.

13. A construction as claimed in claim 12, **characterized in that** the through-connection element (21) is provided with a pierced recess (22), it being passible to pull, with the aid of a flexible connecting element (19) passed through the recess (22), a teat cup (16, 17, 34 - 37) into this recess (22) against the carrier (13) by means of a bulging portion (20) provided at the side of the cup.

14. A construction as claimed in claim 12 or 13 **characterized in that** the section of the milk (23) and/or pulsation (24) tube between a teat cup (16, 17, 34 - 37) and the through-connection element (21) extends in the form of a loop.

15. A construction as claimed in claim 14, **characterized in that** the section of the milk (23) and/or pulsation (24) tube between a teat cup (16, 17, 34 - 37) and the through-connection element (21) is connected from the teat cup to the through-connection element (21) via a slotted aperture (27) in the bottom side of the tubular portion of the carrier (13) through this tubular portion of the carrier (13) and through a slotted aperture (28) in the upper side of the tubular portion of the carrier (13).

16. A construction as claimed in any once of claims 12 - 15, **characterized in that** the through-connection element (21) is suitable for accomodating the milk (23) and/or pulsation (24) tube of two teat cups (16, 17), whilst the through-connection element (21) is provided with two recesses (22) into which the two teat cups (16, 17), provided with a bulging portion (20), can be pulled.

17. A construction as claimed in claim 16, **characterized in that**, in the tightened state, the two teat cups are disposed substantially in contact with each other at the end of a carrier (13).

## Patentansprüche

1. Vorrichtung zum automatischen Melken von Tieren, wie z. B. von Kühen, mit einer Melkbox (1) und einem Melkroboter (7), der entweder zwei Roboterarm-Konstruktionen (8) aufweist, die jeweils mit einem Stützelement (11) und einem Träger (13) für zwei Zitzenbecher (16, 17) versehen sind, oder vier Roboterarm-Konstruktionen (8) aufweist, die jeweils mit einem Stützelement und einem Träger für nur einen Zitzenbecher (34; 35; 36; 37) versehen sind, wobei diese vier Zitzenbecher (34; 35; 36; 37) an beiden Längsseiten der Melkbox (1) paarig angeordnet sind, wobei die Träger (13) in einer horizontalen Ebene und auf- und abwärts bewegbar sind,
**dadurch gekennzeichnet, daß** die Roboterarm-Konstruktionen (8), die zusammen alle Zitzenbecher tragen, an beiden Längsseiten der Melkbox angeordnet sind, so daß zwei Zitzenbecher für die linken Zitzen des Tieres an der entsprechenden Längsseite und zwei Zitzenbecher für die rechten Zitzen des Tieres an der anderen Längsseite angeordnet sind, wobei die Träger (13) einzeln aus einer Ruhelage seitlich der Melkbox (1) in eine Arbeitslage unter das Euter eines Tieres bewegbar sind und sich in mindestens zwei verschiedene Richtungen erstrecken, in denen jeder Träger (13) nahe einer Seitenwand der Melkbox (1) derart angeordnet ist, daß er in mindestens zwei Richtungen bewegbar ist, die vorzugsweise senkrecht zueinander verlaufen, wobei jeder Träger (13) aus der Ruhelage in die Arbeitslage schwenkbar und in dieser Arbeitslage in der horizontalen Ebene in zwei annähernd senkrecht zueinander verlaufenden Richtungen bewegbar und auf dem Stützelement (11) angeordnet ist, das um eine überwiegend vertikale Achse (12) schwenkbar ist, wobei der Träger (13) durch Schwenken um diese Achse (12) aus der Ruhelage in die Arbeitslage bewegt werden kann und das Stützelement (11) nach oben und unten höhenbewegbar, beispielsweise mittels einer Parallelogrammführung (10), an der Außenseite und nahe einer Seitenwand der Melkbox (1) angeordnet ist.

2. Vorrichtung nach Anspruch 1,
**dadurch gekennzeichnet, daß** sich während des Melkens mindestens ein Träger (13) in einer Position hinter einem Hinterbein eines Tieres und mindestens ein anderer Träger (13) in einer Position vor einem Hinterbein dieses Tieres befindet.

3. Vorrichtung nach Anspruch 1 oder 2,
**dadurch gekennzeichnet, daß** die Träger (13) der Zitzenbecher (34-37) während des Melkens in einer etwa horizontalen Ebene sternförmig um das Euter eines Tieres angeordnet sind.

4. Vorrichtung nach einem der vorhergehenden Ansprüche,
**dadurch gekennzeichnet, daß** die Träger (13) eine gekrümmte Form haben.

5. Vorrichtung nach Anspruch 1,
**dadurch gekennzeichnet, daß** ein Träger (13) sowohl in Längs- als auch in Querrichtung der Melkbox (1) unter das Euter eines Tieres bewegbar ist.

6. Vorrichtung nach einem der vorhergehenden Ansprüche,
**dadurch gekennzeichnet, daß** eine Ermittlungseinrichtung (18), wie z. B. ein Laser, vorhanden ist, die mit einem der Träger (13) verbunden ist, und mittels der die Position der Zitzen eines Tieres zu bestimmen ist.

7. Vorrichtung nach Anspruch 6,
**dadurch gekennzeichnet, daß** die Ermittlungseinrichtung (18) in einer etwa mittigen Lage unter dem Tier an der Vorderseite des Euters positioniert ist, wenn der Träger, mit dem die Ermittlungseinrichtung (18) verbunden ist, in die Arbeitslage eingestellt und derart bewegt worden ist, daß sich der oder die von ihm getragenen Zitzenbecher unterhalb des Euters des Tieres befinden.

8. Vorrichtung nach einem der vorhergehenden Ansprüche,
**dadurch gekennzeichnet, daß** zumindest das einen oder mehrere Zitzenbecher (16, 17, 34-37) tragende Ende eines Trägers (13) rohrförmig ausgebildet ist.

9. Vorrichtung nach Anspruch 8,
**dadurch gekennzeichnet, daß** ein Zitzenbecher (16, 17, 34-37) über ein flexibles Verbindungselement (19), wie z. B. ein Seil oder Kabel, derart angeschlossen ist, daß der Zitzenbecher während des Melkens frei beweglich ist und nach dem Melken gegen das Ende dieses Trägers (13) gezogen wird.

10. Vorrichtung nach Anspruch 9,
**dadurch gekennzeichnet, daß** das flexible Verbindungselement (19) in dem rohrförmigen Teil des Trägers (13) angeordnet ist.

11. Vorrichtung nach einem der Ansprüche 8 bis 10,
**dadurch gekennzeichnet, daß** an der Seite eines Zitzenbechers (16, 17, 34-37) ein ausgebuchteter Teil (20) vorhanden ist, der mittels eines flexiblen Verbindungselementes (19) in eine entsprechend geformte Ausnehmung (22) im Ende eines Trägers (13) zu ziehen ist.

12. Vorrichtung nach einem der Ansprüche 8 bis 11,
**dadurch gekennzeichnet, daß** an oder nahe dem Ende eines rohrförmigen Trägers (13) ein Durchverbindungselement (21) für eine oder mehrere Milchleitungen (23) und/oder Pulsierleitungen (24) innerhalb des Trägers angeordnet ist.

13. Vorrichtung nach Anspruch 12,
**dadurch gekennzeichnet, daß** das Durchverbindungselement (21) eine gelochte Ausnehmung (22) aufweist, wobei ein Zitzenbecher (16, 17, 34-37) mit einem an seiner Seite ausgebildeten ausgebuchteten Teil (20) mittels eines flexiblen Verbindungselementes (19), das durch die Ausnehmung (22) hindurchgeführt ist, gegen den Träger (13) in diese Ausnehmung (22) hineinzuziehen ist.

14. Vorrichtung nach Anspruch 12 oder 13,
**dadurch gekennzeichnet, daß** der zwischen einem Zitzenbecher (16, 17, 34-37) und dem Durchverbindungselement (21) liegende Abschnitt der Milchleitung (23) und/oder der Pulsierleitung (24) schlaufenförmig angeordnet ist.

15. Vorrichtung nach Anspruch 14,
**dadurch gekennzeichnet, daß** die Verbindung des zwischen einem Zitzenbecher (16, 17, 34-37) und dem Durchverbindungselement (21) liegenden Abschnittes der Milchleitung (23) und/oder der Pulsierleitung (24) mit dem Zitzenbecher und dem Durchverbindungselement (21) durch eine schlitzförmige Öffnung (27) in der Unterseite des rohrförmigen Teiles des Trägers (13) hergestellt wird, derart, daß der Leitungsabschnitt durch diesen rohrförmigen Teil des Träges (13) sowie durch eine schlitzförmige Öffnung (28) in der Oberseite des rohrförmigen Teiles des Trägers (13) hindurchgeführt ist.

16. Vorrichtung nach einem der Ansprüche 12 bis 15,
**dadurch gekennzeichnet, daß** das Durchverbindungselement (21) für die Milchleitung (23) und/oder die Pulsierleitung (24) zweier Zitzenbecher (16, 17) ausgelegt ist, wobei das Durchverbindungselement (21) zwei Ausnehmungen (22) aufweist, in die die beiden mit einem ausgebuchteten Teil (20) versehenen Zitzenbecher (16, 17) hineinzuziehen sind.

17. Vorrichtung nach Anspruch 16,
**dadurch gekennzeichnet, daß** die beiden Zitzenbecher in angezogenem Zustand im wesentlichen einander berührend am Ende eines Trägers (13) angeordnet sind.

## Revendications

1. Structure pour la traite automatique d'animaux, telles que des vaches, comprenant une chambre de traite (1) ayant un robot de traite (7) présentant soit deux structures de bras de robot (8), pourvues chacune d'un élément de support (11) et un support (13) pour deux gobelets trayeurs (16, 17), ou quatre structures de bras de robot (8), chacune étant pourvue d'un élément de support et un support pour un seul gobelet trayeur (34, 35, 36, 37), ces quatre gobelets trayeurs (34, 35, 36, 37) étant disposés deux par deux des deux côtés de la chambre de traite (1) ces supports (13) étant déplaçables dans un plan horizontal et dans une direction orientée vers le haut et vers le bas, **caractérisée en ce que** les structures de bras de robot (8), supportant ensemble tous les gobelets trayeurs, sont agencées sur au moins deux côtés de la chambre de traite, de sorte que deux gobelets trayeurs pour les trayons gauches de l'animal sont disposés sur le côté correspondant et deux gobelets trayeurs pour les trayons droits de l'animal sont disposés sur le côté opposé les supports (13) étant déplaçables individuellement depuis une position d'inactivité latéralement à la chambre de traite (1), vers une position de travail au-dessous du pis d'un animal et s'étendant dans au moins deux directions différentes, dans lesquelles chaque support (13) est disposé près d'une paroi latérale de la chambre de traite (1) de manière à pouvoir se déplacer dans au moins deux directions qui sont, de préférence, perpendiculaires entre elles, chaque support (13) peut pivoter de la position d'inactivité à la position de travail et, dans cette position de travail, est déplaçable dans ledit plan horizontal, dans deux directions qui sont à peu près perpendiculaires entre elles sur l'élément de support (11) pouvant pivoter autour d'un arbre (12) principalement vertical, tout en le faisant pivoter autour de cet arbre (12), le support (13) pouvant être déplacé depuis la position d'inactivité vers la position de travail et l'élément de support (11) étant disposé de manière à pouvoir être déplacé en hauteur dans ladite direction orientée vers le haut et vers le bas, par exemple au moyen d'une structure en parallélogramme (10), du côté extérieur (2) et à proximité d'une paroi latérale de la chambre de traite (1).

2. Structure selon la revendication 1, **caractérisée en ce que**, durant la traite, au moins un support (13) se trouve dans une position derrière la patte arrière d'un animal et au moins un autre support (13) dans une position se trouvant à l'avant de la patte arrière de cet animal.

3. Structure selon la revendication 1 ou 2, **caractérisée en ce que**, durant la traite, les supports (13) des gobelets trayeurs (34 à 37) sont disposés dans un plan à peu près horizontal, se présentant sous la forme d'une étoile, autour du pis d'un animal.

4. Structure selon l'une quelconque des revendications précédentes, **caractérisée en ce que** les supports (13) présentent une forme incurvée.

5. Structure selon la revendication 1, **caractérisée en ce qu'**un support (13) peut être déplacé au-dessous du pis d'un animal à la fois dans la direction longitudinale et dans la direction transversale de la chambre de traite (1).

6. Structure selon l'une quelconque des revendications précédentes, **caractérisée en ce qu'**un dispositif de détection (18), tel qu'un laser, est présent, relié à l'un des supports (13), dispositif de détection (18) à l'aide duquel la position des tétines d'un animal peut être déterminée.

7. Structure selon la revendication 6, **caractérisée en ce que**, lorsque le support auquel est relié le dispositif de détection (18) a été réglé vers la position de travail et a été déplacé de manière que le gobelet trayeur ou les gobelets trayeurs supportés de ce fait soi(en)t placé(s) au-dessous du pis de l'animal, le dispositif de détection (18) se trouve dans une position située à peu près au milieu au-dessous de l'animal, du côté avant du pis.

8. Structure selon l'une quelconque des revendications précédentes, **caractérisée en ce qu'**au moins l'extrémité d'un support (13), au niveau de laquelle il supporte un ou plusieurs gobelets trayeurs (16, 17, 34 à 37), est une structure de forme tubulaire.

9. Structure selon la revendication 8, **caractérisée en ce qu'**un gobelet trayeur (16, 17, 34 à 37) est relié à l'aide d'un élément de liaison (19) flexible, tel qu'une corde ou un câble, de manière que, durant la traite, il puisse se déplacer librement et, après la traite, il soit tiré contre l'extrémité de ce support (13).

10. Structure selon la revendication 9, **caractérisée en ce que** l'élément de liaison (19) flexible est disposé dans la partie tubulaire du support (13).

11. Structure selon l'une quelconque des revendications 8 à 10, **caractérisée en ce qu'**un gobelet trayeur (16, 17, 34 à 37) est pourvu, sur l'un de ses côtés, d'une partie bombée (20) qui peut être tirée dans une cavité (22) de forme correspondante, ménagée dans l'extrémité d'un support (13), à l'aide d'un élément de liaison (19) flexible.

12. Structure selon l'une quelconque des revendications 8 à 11, **caractérisée en ce que**, au niveau de ou près de l'extrémité d'un support tubulaire (13), un élément de liaison traversante (21) est incorporé en son sein pour un ou plusieurs tubes de traite (23) et/ou d'impulsions (24).

13. Structure selon la revendication 12, **caractérisée en ce que** l'élément de liaison traversante (21) est pourvu d'une cavité percée (22), permettant de tirer, à l'aide d'un élément de liaison (19) flexible passé dans la cavité (22), un gobelet trayeur (16, 17, 34 à 37) dans cette cavité (22), contre le support (13), au moyen d'une partie bombée (20) prévue sur le côté du gobelet.

14. Structure selon la revendication 12 ou 13, **caractérisée en ce que** la section du tube de traite (23) et/ou d'impulsions (24) entre un gobelet trayeur (16, 17, 34 à 37) et l'élément de liaison traversante (21) s'étend sous la forme d'une boucle.

15. Structure selon la revendication 14, **caractérisée en ce que** la section du tube de traite (23) et/ou d'impulsions (24) entre un gobelet trayeur (16, 17, 34 à 37) et l'élément de liaison traversante (21) est reliée du gobelet trayeur à l'élément de liaison traversante (21), via une ouverture à fente (27) ménagée dans le côté inférieur de la partie tubulaire du support (13), via cette partie tubulaire du support (13) et via une ouverture à fente (28), dans le côté supérieur de la partie tubulaire du support (13).

16. Structure selon l'une quelconque des revendications 12 à 15 , **caractérisée en ce que** l'élément de liaison traversante (21) convient pour loger le tube de traite (23) et/ou d'impulsions (24) de deux gobelets trayeurs (16, 17), tandis que l'élément de liaison traversante (21) est pourvu de deux cavités (22) dans lesquelles peuvent être tirés les deux gobelets trayeurs (16, 17) pourvus d'une partie bombée (20).

17. Structure selon la revendication 16, **caractérisée en ce que**, à l'état serré, les deux gobelets trayeurs sont disposés sensiblement en contact entre eux à l'extrémité d'un support (13).
